# EUROPEAN PATENT SPECIFICATION

(11) **EP 4 206 745 B1**
(45) Date of publication and mention of the grant of the patent: **08.07.2026**
(21) Application number: 21897485.5
(22) Date of filing: 24.09.2021
(51) Int. Cl.: G01T 1/20, G01T 1/29

(54) **IMAGING UNIT AND IMAGING SYSTEM**
BILDGEBUNGSEINHEIT UND BILDGEBUNGSSYSTEM
UNITÉ D'IMAGERIE ET SYSTÈME D'IMAGERIE

(30) Priority: 25.11.2020 JP 2020195049
(43) Date of publication of application: 05.07.2023
(73) Proprietor: Hamamatsu Photonics K.K., Hamamatsu-shi, Shizuoka 435-8558 (JP)
(72) Inventor: SUZUKI, Haruki, Hamamatsu-shi, Shizuoka 435-8558 (JP)
(74) Representative: TBK
(86) International application number: PCT/JP2021/035165
(87) International publication number: WO 2022/113507

(56) References cited:
- WO-A1-2020/174850
- WO-A2-2009/098014
- JP-A- 2002 034 961
- JP-A- 2014 179 356
- JP-A- 2020 139 816
- US-A1- 2014 312 238

## Description

### Technical Field

The present disclosure relates to an imaging unit and an imaging system.

### Background Art

As an imaging system of the related art, for example, there is an imaging system described in Patent Literature 1. The imaging system of the related art includes a first sensor module and a second sensor module that detect scintillation lights emitted from a scintillator. The first sensor module and the second sensor module capture images of respective scintillation lights emitted from a front surface and a back surface of the scintillator. Accordingly, dual-energy imaging for acquiring radiation images of an object in different energy bands is realized.

### Citation List

### Patent Literature

Patent Literature 1: Japanese Unexamined Patent Publication No. 2012-154733
Patent Literature 2: document WO2020/174850A1 disclosing an imaging unit and a radiation image acquisition system
Patent Literature 3: document US2014/312238A1 disclosing flexible connectors for pet detectors
Patent Literature 4: document WO2009/098014A2 disclosing a device and method for recording an image

### Summary of Invention

### Technical Problem

In the imaging system according to Patent Literature 1, since a plurality of sensor modules are used, it is considered that a configuration of an imaging unit forming the imaging system becomes complicated. In addition, in the imaging system described above, there may be restrictions on the disposition of the scintillator to optimize imaging of the object. In that case, ensuring the degree of freedom in adjusting imaging positions in the imaging unit is required.

An object of the present invention is to provide an imaging unit and an imaging system capable of ensuring the degree of freedom in adjusting imaging positions with a simple configuration.

### Solution to Problem

An imaging unit according to one aspect of the present invention is defined in the appended claim 1. Advantageous modifications are set forth in the dependent claims. Accordingly, the following advantages can be achieved.

In the imaging unit, the processing substrate that processes the first image signal and the second image signal from the first sensor module and the second sensor module is common. Therefore, the configuration is simplified compared to a configuration in which a processing substrate is provided for each sensor module. In addition, in the imaging unit, each of the first connection member and the second connection member that connect the first sensor module and the second sensor module to the processing substrate, respectively, has flexibility for common use of the processing substrate. For this reason, the imaging positions of the first sensor module and the second sensor module can be separately adjusted. Therefore, the degree of freedom in adjusting the imaging positions can be sufficiently ensured.

The imaging unit further includes a scintillator that emits a scintillation light upon an incidence of radiation. Accordingly, workability when the imaging unit is assembled to an imaging system can be improved.

The scintillator has a first surface serving as an incident surface of the radiation, and a second surface facing the first surface. The first sensor module may be disposed on a first surface side of the scintillator in a facing direction between the first surface and the second surface. The first sensor module may detect the scintillation light emitted from the first surface upon the incidence of the radiation, as the first scintillation light. The second sensor module may be disposed on a second surface side of the scintillator in the facing direction. The second sensor module may detect the scintillation light emitted from the second surface upon the incidence of the radiation, as the second scintillation light. Accordingly, for example, dual-energy imaging using a scintillation light in a low energy band and a scintillation light in a high energy band can be suitably realized.

The first sensor module and the second sensor module are disposed apart from the scintillator on one side in an in-plane direction of the first surface and the second surface. An interval between the first lens of the first sensor module and the first surface in the facing direction may be smaller than an interval between the second lens of the second sensor module and the second surface in the facing direction. A position of the second lens in the in-plane direction may be closer to a scintillator side than a position of the first lens in the in-plane direction. In this case, when the imaging unit is assembled to the imaging system, the first surface of the scintillator can be disposed close to an object. In addition, even when the first surface of the scintillator is disposed close to the object, an optical path length of the first scintillation light and an optical path length of the second scintillation light can be set to coincide with each other.

The scintillator has a first surface serving as an incident surface of the radiation, and a second surface facing the first surface. The first sensor module and the second sensor module may be disposed on a first surface side of the scintillator in a facing direction between the first surface and the second surface, and may be arranged in an in-plane direction of the first surface. The first sensor module may detect the scintillation light emitted from the first surface upon the incidence of the radiation, as the first scintillation light. The second sensor module may detect the scintillation light emitted from the first surface upon the incidence of the radiation, as the second scintillation light. In this case, the respective scintillation lights from single side of the scintillator can be accurately detected by the first sensor module and the second sensor module.

The scintillator has a first surface serving as an incident surface of the radiation, and a second surface facing the first surface. The first sensor module and the second sensor module may be disposed on a second surface side of the scintillator in a facing direction between the first surface and the second surface, and may be arranged in an in-plane direction of the second surface. The first sensor module may detect the scintillation light emitted from the second surface upon the incidence of the radiation, as the first scintillation light. The second sensor module may detect the scintillation light emitted from the second surface upon the incidence of the radiation, as the second scintillation light. In this case, the respective scintillation lights from single side of the scintillator can be accurately detected by the first sensor module and the second sensor module.

A visual field of the first lens of the first sensor module and a visual field of the second lens of the second sensor module may partially overlap each other in the in-plane direction of the first surface and the second surface. In this case, since the visual field of the first lens and the visual field of the second lens are continuous with each other, an image of the scintillation light can be captured over a wide range without a blind spot.

The first sensor module and the second sensor module are disposed apart from the scintillator on one side in the in-plane direction of the first surface and the second surface. An interval between the first lens of the first sensor module and the scintillator in the facing direction may be equal to an interval between the second lens of the second sensor module and the scintillator in the facing direction. Positions of the first lens and the second lens in the in-plane direction with respect to the scintillator may coincide with each other. In this case, the first lens and the second lens can be common. In addition, since image correction due to a difference between the optical path length of the first scintillation light to be incident on the first lens and the optical path length of the second scintillation light to be incident on the second lens is not required, image processing in the processing substrate can be prevented from being complicated.

An imaging system according to one aspect of the present disclosure includes: a conveying device that conveys an object; a radiation source that emits radiation toward the object conveyed by the conveying device; and the imaging unit that executes image processing based on an image signal corresponding to the radiation that has transmitted through the object. According to the imaging system, as described above, the configuration can be simplified, and the degree of freedom in adjusting imaging positions can be sufficiently ensured.

### Advantageous Effects of Invention

According to the present disclosure, it is possible to provide the imaging unit and the imaging system capable of ensuring the degree of freedom in adjusting the imaging positions with a simple configuration.

### Brief Description of Drawings

FIG. 1 is a view showing a schematic configuration of an imaging system according to a first embodiment.
FIG. 2 is a plan view of an imaging unit shown in FIG. 1.
FIG. 3 is a view showing a schematic configuration of an imaging unit according to a second embodiment.
FIG. 4 is a plan view of the imaging unit shown in FIG. 3.
FIG. 5 is a view showing visual fields of a first lens and a second lens shown in FIG. 3.
FIG. 6 is a view showing a schematic configuration of an imaging unit according to a third embodiment.
FIG. 7 is a plan view of the imaging unit shown in FIG. 6.

### Description of Embodiments

Hereinafter, embodiments of the present disclosure will be described with reference to the drawings. In the description of the drawings, the same elements are denoted by the same reference signs, and duplicate descriptions will not be repeated. In addition, in each drawing, for convenience of description, portions to be described are drawn in an emphasized manner. For this reason, a dimensional ratio of each member in the drawings does not necessarily coincide with an actual dimensional ratio.

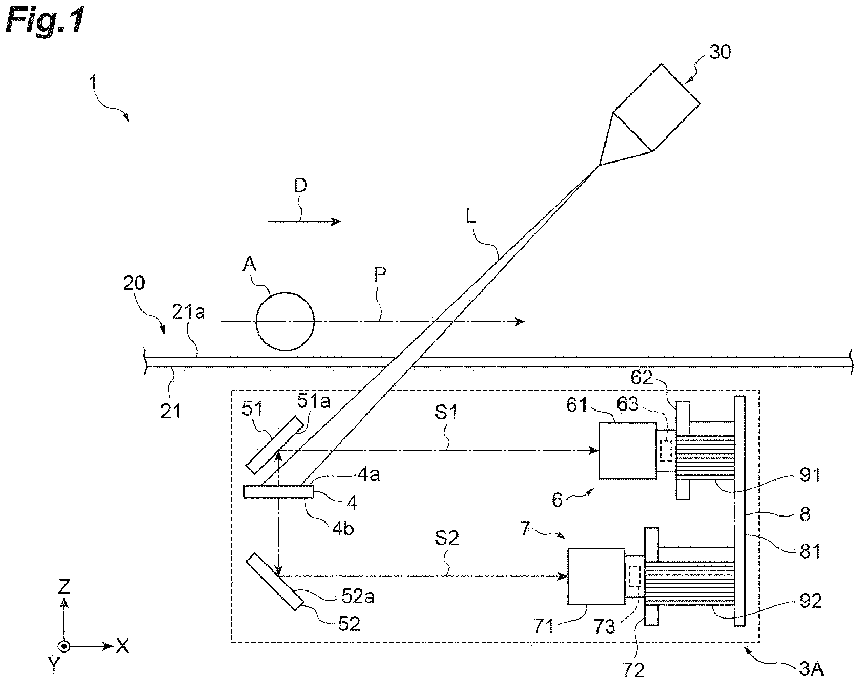

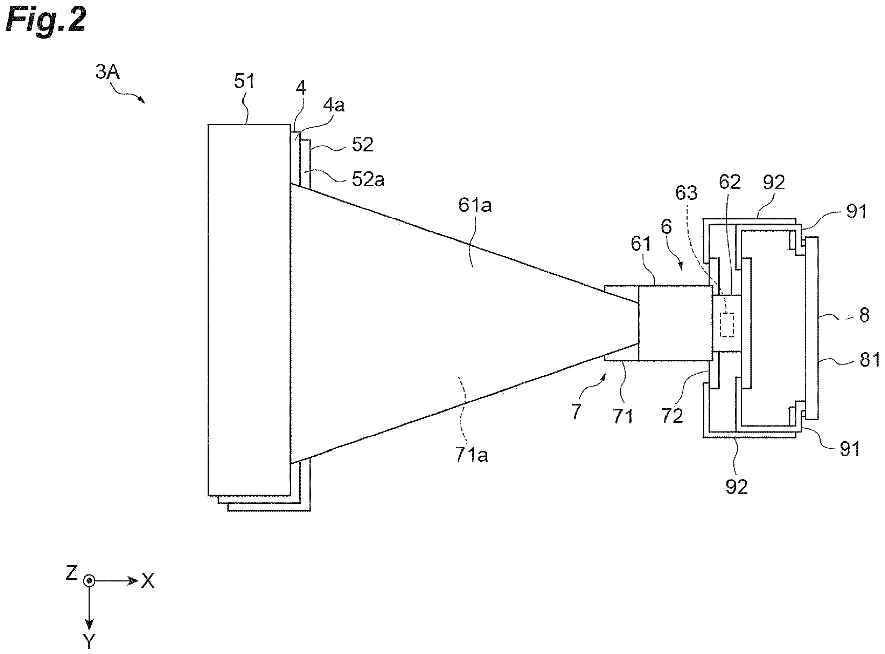

[First embodiment] FIG. 1 is a view showing a schematic configuration of an imaging system according to a first embodiment of the present disclosure. FIG. 2 is a plan view of an imaging unit shown in FIG. 1. As shown in FIGS. 1 and 2, an imaging system 1 of the first embodiment is a device that acquires a radiation image of an object A. The imaging system 1 is an X-ray imaging system using a scintillator double-sided observation method. The imaging system 1 is applied to, for example, in-line X-ray inspection. The imaging system 1 shows good performance in discriminating, for example, a substance consisting of a light element. The imaging system 1 is applied to, for example, a field such as food inspection or battery inspection. The object A contains, for example, a substance consisting of a light element. In the field of food inspection, for example, it is inspected whether or not foreign matter is caught in food. Examples of such matter include food waste, hair, vinyl, insects, bones in meat, and the like.

The imaging system 1 includes a conveying device 20 that conveys the object A in a predetermined conveying direction D (X-axis direction); a radiation source 30 that emits radiation L such as a white X-ray toward the object A conveyed by the conveying device 20; and an imaging unit 3A that executes image processing based on an image signal corresponding to the radiation L that has transmitted through the object A.

The conveying device 20 includes, for example, a belt conveyor 21 that moves on a revolving trajectory. The object A is placed or held on a conveying surface 21a of the belt conveyor 21. The belt conveyor 21 is a conveying stage or a conveying unit. The conveying device 20 includes a drive source (not shown) that drives the belt conveyor 21. The conveying device 20 is configured to convey the object A in the conveying direction D at a constant speed. In other words, the object A is conveyed on a predetermined conveying path P by the conveying device 20. In the present embodiment, the conveying direction D is a horizontal direction. In addition, the conveying path P has a linear shape. A direction in which the conveying path P extends is parallel to the conveying direction D. A conveying timing or a conveying speed of the object A in the conveying device 20 is set in advance and is controlled by a control unit.

The imaging system 1 is compatible with the conveying device 20 of any form. The conveying direction D and the conveying path P may be horizontal. The conveying direction D and the conveying path P may be inclined with respect to the horizontal. The conveying path P may have a linear shape or a curved shape. In that case, the conveying direction D may be tangent to a portion of the conveying path P overlapping an irradiation region of the radiation. The conveying device 20 may not have the physical conveying surface 21a. The conveying device 20 may convey the object A in a state where the object A is lifted by the air. The conveying device 20 may convey the object A by releasing the object A to the air. In that case, the conveying path P may have, for example, a parabolic shape. The conveying device 20 may include a roller conveyor including a plurality of rollers.

The radiation source 30 emits the radiation L. The radiation L is, for example, a cone beam X-ray. The radiation source 30 may be a microfocus X-ray source or a millifocus X-ray source. The radiation L emitted from the radiation source 30 forms a radiation flux. A presence region of the radiation flux is an emission region of the radiation source 30.

The imaging unit 3A is disposed opposite the radiation source 30 with respect to the conveying surface 21a of the belt conveyor 21. The imaging unit 3A is attached to the conveying device 20 so as not to interfere with the revolving of the belt conveyor 21. The same also applies to the case where the conveying device 20 is a roller conveyor. The imaging unit 3A is disposed with some gap from the conveying unit so as not to interfere with movement of the conveying unit such as a belt conveyor, or a roller conveyor.

The imaging unit 3A includes a scintillator 4, a first mirror 51, a second mirror 52, a first sensor module 6, a second sensor module 7, a processing substrate (image processing unit and control unit) 8, a first connection member 91, and a second connection member 92.

The scintillator 4 is a wavelength conversion member. The scintillator 4 emits a scintillation light upon an incidence of the radiation L that has transmitted through the object A. The scintillator 4 has an oblong plate shape extending in a detection width direction (Y-axis direction). The scintillator 4 has a first surface 4a serving as an incident surface of the radiation L, and a second surface 4b facing the first surface 4a in a Z-axis direction. The first surface 4a and the second surface 4b are parallel to the conveying surface 21a of the belt conveyor 21. The first surface 4a faces a radiation source 30 side. The scintillator 4 converts the radiation L that has transmitted through the object A, into a scintillation light (visible light). An X-ray having a relatively low energy is converted into a scintillation light S1 by the first surface 4a of the scintillator 4, and the scintillation light S1 is output from the first surface 4a. In addition, an X-ray having a relatively high energy is converted into a scintillation light S2 by the second surface 4b of the scintillator 4, and the scintillation light S2 is output from the second surface 4b.

The scintillator 4 consists of, for example, Gd₂O₂S:Tb, Gd₂O₂S:Pr, CsI:Tl, CdWO₄, CaWO₄, Gd₂SiO₅:Ce, Lu_{0.4}Gd_{1.6}SiO₅, Bi₄Ge₃O₁₂, Lu₂SiO₅:Ce, Y₂SiO₅, YAlO₃:Ce, Y₂O₂S:Tb, YTaO₄:Tm, YAG:Ce, YAG:Pr, YGAG:Ce, YGAG:Pr, GAGG:Ce, or the like. A thickness of the scintillator 4 is set to an appropriate value within a range of several µm to several mm depending on an energy band of radiation to be detected. The scintillator 4 may be formed of one scintillator. The scintillator 4 may be a combination of a plurality of scintillators. When the plurality of scintillators are combined, the types of the scintillators may be the same or different.

The first mirror 51 is, for example, a mirror made of glass onto aluminum is evaporated or mirror-finished metal. The first mirror 51 is disposed on the radiation source 30 side with respect to the scintillator 4. The first mirror 51 has an oblong plate shape extending in the detection width direction (Y-axis direction). The first mirror 51 has a reflective surface 51a. The reflective surface 51a forms at an acute angle with respect to the first surface 4a of the scintillator 4. The reflective surface 51a obliquely faces the first surface 4a, and obliquely faces the first sensor module 6. The reflective surface 51a reflects the scintillation light S1 emitted from the first surface 4a, toward the first sensor module 6.

The second mirror 52 is, for example, a mirror made of glass onto aluminum is evaporated or mirror-finished metal. The second mirror 52 is disposed opposite the first mirror 51 with respect to the scintillator 4. The second mirror 52 has an oblong plate shape extending in the detection width direction (Y-axis direction). The second mirror 52 has a reflective surface 52a. The reflective surface 52a forms at an acute angle with respect to the second surface 4b of the scintillator 4. The reflective surface 52a obliquely faces the second surface 4b, and obliquely faces the second sensor module 7. The reflective surface 52a reflects the scintillation light S2 emitted from the second surface 4b, toward the second sensor module 7.

The reflective surface 51a has an area sufficient enough to reflect the scintillation light S1 emitted in a normal direction of the first surface 4a. The reflective surface 52a has an area sufficient enough to reflect the scintillation light S2 emitted in a normal direction of the second surface 4b. It is preferable that each of an angle between the reflective surface 51a and the first surface 4a and an angle between the reflective surface 52a and the second surface 4b is an angle within a range of 40 degrees or more 50 degrees or less. In the present embodiment, the angle is 45 degrees. The angle may be determined based on the disposition of the radiation source 30 or the position of a slit of a housing to be described later. Depending on the magnitude of the angle, the disposition of the first sensor module 6 and the second sensor module 7 may be appropriately adjusted.

The first sensor module 6 is disposed apart from the scintillator 4 on one side (downstream side of the scintillator 4 in the conveying direction D) of the X-axis direction (in-plane direction of the first surface 4a and the second surface 4b of the scintillator 4). The first sensor module 6 is disposed on a first surface 4a side of the scintillator 4 in the Z-axis direction (facing direction between the first surface 4a and the second surface 4b of the scintillator 4). The first sensor module 6 detects the scintillation light S1 emitted from the first surface 4a upon an incidence of the radiation L, as a first scintillation light. Incidentally, the first scintillation light refers to a scintillation light detected by the first sensor module.

The first sensor module 6 captures an image of the object A according to movement of the object A. The first sensor module 6 is a lens-coupled detector. Specifically, the first sensor module 6 includes a first lens 61, a first body 62, and a first sensor 63. The first lens 61 is attached to the first body 62. The first lens 61 faces the reflective surface 51a of the first mirror 51 in the X-axis direction. An optical axis of the first lens 61 is parallel to the X-axis direction. The first lens 61 is focused on the reflective surface 51a. A visual field 61a of the first lens 61 extends over a wide range of the reflective surface 51a in the Y-axis direction. The first lens 61 condenses the scintillation light S1 reflected by the reflective surface 51a. The first sensor 63 is provided inside the first body 62. The first sensor 63 detects the scintillation light S1 condensed by the first lens 61, and outputs a first image signal corresponding to a detection result.

The first sensor 63 is an image sensor. The first sensor 63 is, for example, a general line sensor, a multi-line sensor, or an area image sensor that can be driven in a time delay integration (TDI) mode. The first sensor 63 is, for example, a CCD area image sensor or a CMOS image sensor. The first sensor 63 has an element row along which a plurality of light-receiving elements are arranged in a row in a pixel direction. The image pitches of the plurality of light-receiving elements may be the same or different. In the first sensor 63, a plurality of stages of the element rows are arranged in an integration direction to correspond to a movement direction of the object A. The first sensor 63 has a scanning direction corresponding to the conveying direction D of the object A, and a line direction orthogonal to the scanning direction. The scanning direction is the foregoing integration direction, and is parallel to the Z-axis direction. The line direction is the foregoing pixel direction, and is parallel to the Y-axis direction. The scanning direction is a direction that is converted from the conveying direction D via the first mirror 51. In the present embodiment, the scanning direction is converted from the conveying direction D by 90 degrees.

The first sensor 63 is controlled by the control unit to perform charge transfer according to movement of the object A. Namely, the first sensor 63 performs charge transfer on a light receiving surface in synchronization with movement of the object A by the conveying device 20. Accordingly, a radiation image having a good S/N ratio can be obtained When the first sensor 63 is an area image sensor, the control unit is configured to control the radiation source 30 and the first sensor module 6 to turn on the radiation source 30 according to an imaging timing of the first sensor module 6. The first sensor module 6 may be controlled by a signal from an encoder provided on a stage.

The second sensor module 7 is disposed apart from the scintillator 4 on the one side in the X-axis direction. The second sensor module 7 is disposed on a second surface 4b side of the scintillator 4 in the Z-axis direction. The second sensor module 7 detects the scintillation light S2 emitted from the second surface 4b upon an incidence of the radiation L, as a second scintillation light. Incidentally, the second scintillation light refers to a scintillation light detected by the second sensor module.

The second sensor module 7 captures an image of the object A according to movement of the object A. The second sensor module 7 is a lens-coupled detector. Specifically, the second sensor module 7 includes a second lens 71, a second body 72, and a second sensor 73. The second lens 71 is attached to the second body 72. The second lens 71 faces the reflective surface 52a of the second mirror 52 in the X-axis direction. An optical axis of the second lens 71 is parallel to the X-axis direction. The second lens 71 is focused on the reflective surface 52a. A visual field 71a of the second lens 71 extends over a wide range of the reflective surface 52a in the Y-axis direction. The second lens 71 condenses the scintillation light S2 reflected by the reflective surface 52a. The second sensor 73 is provided inside the second body 72. The second sensor 73 detects the scintillation light S2 condensed by the second lens 71, and outputs a second image signal corresponding to a detection result. The second sensor 73 has the same configuration as that of the first sensor 63, and is controlled in the same manner as in the first sensor 63. A detailed description of the second sensor 73 will not be repeated.

The processing substrate 8 includes a substrate 81 and a processor (not shown) attached to the substrate 81. The processing substrate 8 functions as an image processing unit that executes image processing based on the first image signal output from the first sensor 63 and on the second image signal output from the second sensor 73. Specifically, the processing substrate 8 performs image processing such as magnification correction, luminance value correction, dark correction, shading correction, affine transformation processing, edge enhancement processing, noise removal processing, bilateral filtering, or view angle adjustment on at least one of the first image signal and the second image signal. The processing substrate 8 outputs a radiation image created by executing the image processing, to a computer.

In addition, the processing substrate 8 functions as a control unit that controls imaging conditions of the first sensor 63 and imaging conditions of the second sensor 73. Specifically, the processing substrate 8 sets an exposure time, a gain, an imaging frequency, an imaging timing, and the like for the first sensor 63 and the second sensor 73. In addition, the processing substrate 8 adjusts the imaging timing of the first sensor 63, the imaging timing of the second sensor 73, and image processing timing as the image processing unit and as the control unit. Accordingly, a process of causing the detection ranges of the first image signal and the second image signal to coincide with each other and a process of such as comparing or combining the first image signal and the second image signal are facilitated. The processing substrate 8 may perform control to delay the output of at least one of the first image signal and the second image signal within a range more than the exposure time.

Here, one processing substrate 8 is provided for the first sensor module 6 and the second sensor module 7. Namely, the processing substrate 8 is common to the first sensor module 6 and the second sensor module 7.

The first connection member 91 electrically connects the first sensor module 6 and the processing substrate 8. Specifically, the first connection member 91 electrically connects the first sensor 63 and the image processing processor via wirings provided on the first body 62 and via wirings provided on the substrate 81. The second connection member 92 electrically connects the second sensor module 7 and the processing substrate 8. Specifically, the second connection member 92 electrically connects the second sensor 73 and the image processing processor via wirings provided on the second body 72 and via wirings provided on the substrate 81. Accordingly, the first image signal and the second image signal can be output to the processing substrate 8.

Each of the first connection member 91 and the second connection member 92 has flexibility. Each of the first connection member 91 and the second connection member 92 is easily deformable to the extent that the first connection member 91 and the second connection member 92 receive a load corresponding to, for example, a force of worker's fingers. Each of the first connection member 91 and the second connection member 92 is formed of, for example, a cable, a connector, and the like. Each of the first connection member 91 and the second connection member 92 is formed of, for example, a harness, a connector, and the like. Each of the first connection member 91 and the second connection member 92 is, for example, a flexible connector.

The imaging unit 3A includes, for example, a housing (not shown) having a rectangular parallelepiped shape. The scintillator 4, the first mirror 51, the second mirror 52, the first sensor module 6, the second sensor module 7, and the processing substrate 8 are housed in the housing. Each of the scintillator 4, the first mirror 51, the second mirror 52, the first sensor module 6, the second sensor module 7, and the processing substrate 8 is held by the housing. A slit through which the radiation L emitted from the radiation source 30 passes is formed in a wall portion on the radiation source 30 side of the housing. The slit has, for example, an oblong shape extending in the detection width direction (Y-axis direction).

The housing is made of, for example, a material capable of blocking X-rays. The housing is a so-called dark box. The housing may be made of, for example, metal. The housing is made of, for example, aluminum, iron, stainless steel, or the like. The housing may contain a protective material. The protective material is, for example, metal. Examples of the protective material include lead, tungsten, copper, iron, stainless steel, and the like. The housing has a shape that is long in the conveying direction D. The housing may be attached to the conveying device 20.

The imaging system 1 includes the control unit (not shown). The control unit controls the radiation source 30 based on a value of a tube voltage or a tube current of the radiation source 30 stored by a user's input or the like. The control unit controls each of the first sensor module 6 and the second sensor module 7 based on the exposure time and the like of each of the first sensor module 6 and the second sensor module 7 stored by a user's input or the like. The control unit and the image processing processor of the processing substrate 8 may be separate processors or the same processor.

Next, a positional relationship between the scintillator 4, the first mirror 51, the second mirror 52, the first sensor module 6, and the second sensor module 7 will be described.

An interval between the reflective surface 51a and the first surface 4a of the scintillator 4 in the Z-axis direction is smaller than an interval between the reflective surface 52a and the second surface 4b of the scintillator 4 in the Z-axis direction. Namely, an optical path length of the scintillation light S1 in the Z-axis direction between the reflective surface 51a and the first surface 4a is smaller than an optical path length of the scintillation light S2 in the Z-axis direction between the reflective surface 52a and the second surface 4b.

An interval between the first lens 61 and the first surface 4a of the scintillator 4 in the Z-axis direction is smaller than an interval between the second lens 71 and the second surface 4b of the scintillator 4 in the Z-axis direction. Specifically, an interval between the optical axis of the first lens 61 and the first surface 4a is smaller than an interval between the optical axis of the second lens 71 and the second surface 4b. A position of the second lens 71 in the X-axis direction is closer to a scintillator 4 side than a position of the first lens 61 in the X-axis direction. Namely, an optical path length of the scintillation light S2 in the X-axis direction between the reflective surface 52a and the second lens 71 is smaller than an optical path length of the scintillation light S1 in the X-axis direction between the reflective surface 51a and the first lens 61.

An optical path length of the scintillation light S1 between the first surface 4a of the scintillator 4 and the first lens 61 is equal to an optical path length of the scintillation light S2 between the second surface 4b of the scintillator 4 and the second lens 71. Specifically, the sum of the optical path length of the scintillation light S1 in the Z-axis direction between the reflective surface 51a and the first surface 4a and the optical path length of the scintillation light S1 in the X-axis direction between the reflective surface 51a and the first lens 61 is equal to the sum of the optical path length of the scintillation light S2 in the Z-axis direction between the reflective surface 52a and the second surface 4b and the optical path length of the scintillation light S2 in the X-axis direction between the reflective surface 52a and the second lens 71.

In such a manner, in the imaging unit 3, the first mirror 51 and the first sensor module 6 are disposed close to the scintillator 4 in the Z-axis direction, and the optical path length of the scintillation light S1 and the scintillation light S2 are set to coincide with each other. Accordingly, the scintillator 4 can be disposed close to the object A, and a radiation image of the object A can be accurately acquired.

Here, as described above, each of the first connection member 91 and the second connection member 92 has flexibility. Namely, the first sensor module 6 and the second sensor module 7 are connected to the processing substrate 8 by the first connection member 91 and the second connection member 92, and the positions thereof with respect to the processing substrate 8 can be adjusted. Accordingly, the above-described positional relationship can be easily adjusted by adjusting the position of each of the first sensor module 6 and the second sensor module 7.

Subsequently, an operation of the imaging system 1, namely, a method for acquiring a radiation image will be described.

First, the object A is conveyed in the conveying direction D by the conveying device 20. In addition, the radiation source 30 emits the radiation L toward the object A. The radiation L that has transmitted through the object A is incident on the first surface 4a. Next, the radiation L is converted into a scintillation light by the scintillator 4. The scintillation light S1 emitted from the first surface 4a is reflected by the first mirror 51, and is imaged on the first sensor 63 by the first lens 61 of the first sensor module 6. The first sensor 63 captures an image of the scintillation light S1 (scintillation image) imaged by the first lens 61.

In this imaging step, charge transfer (TDI operation when the first sensor 63 is an area image sensor) is performed synchronously with movement of the object A. The first sensor module 6 outputs the radiation image data (first image signal) obtained by imaging, to the processing substrate 8. Similarly to the first sensor module 6, the second sensor module 7 captures an image of the scintillation light S2, and outputs the obtained radiation image data (second image signal) to the processing substrate 8. The radiation image data is input to the processing substrate 8, and the processing substrate 8 executes predetermined processing such as image processing on the input radiation image data to create a radiation image. The processing substrate 8 outputs the created radiation image to the computer. The computer displays the radiation image output from the processing substrate 8. As described above, the radiation image is obtained by double-sided observation of the object A.

As described above, in the imaging unit 3A, the processing substrate 8 that processes the first image signal and the second image signal from the first sensor module 6 and the second sensor module 7 is common. Therefore, the configuration is simplified compared to a configuration in which a processing substrate is provided for each sensor module. In addition, in the imaging unit 3A, each of the first connection member 91 and the second connection member 92 that connect the first sensor module 6 and the second sensor module 7 to the processing substrate 8, respectively, has flexibility for common use of the processing substrate 8. For this reason, the imaging positions of the first sensor module 6 and the second sensor module 7 can be separately adjusted, and the degree of freedom in adjusting the imaging positions can be sufficiently ensured.

The imaging unit 3A includes the scintillator 4 that emits the scintillation lights S1 and S2 upon an incidence of the radiation L. Accordingly, workability when the imaging unit 3A is assembled to the imaging system 1 can be improved.

The scintillator 4 has the first surface 4a serving as an incident surface of the radiation L, and the second surface 4b facing the first surface 4a. The first sensor module 6 is disposed on the first surface 4a side of the scintillator 4 in the Z-axis direction. The first sensor module 6 detects the scintillation light S1 emitted from the first surface 4a upon an incidence of the radiation L, as the first scintillation light. The second sensor module 7 is disposed on the second surface 4b side of the scintillator 4 in the Z-axis direction. The second sensor module 7 detects the scintillation light S2 emitted from the second surface 4b upon an incidence of the radiation L, as the second scintillation light. Accordingly, for example, dual-energy imaging using a scintillation light in a low energy band and a scintillation light in a high energy band can be suitably realized.

The first sensor module 6 and the second sensor module 7 are disposed apart from the scintillator 4 on the one side in the X-axis direction. The interval between the first lens 61 of the first sensor module 6 and the first surface 4a in the Z-axis direction is smaller than the interval between the second lens 71 of the second sensor module 7 and the second surface 4b in the Z-axis direction. The position of the second lens 71 in the X-axis direction is closer to the scintillator 4 side than the position of the first lens 61 in the Z-axis direction. Accordingly, when the imaging unit 3A is assembled to the imaging system 1, the first surface 4a of the scintillator 4 can be disposed close to the object A. In addition, even when the first surface 4a of the scintillator 4 is disposed close to the object A, the optical path length of the scintillation light S1 (first scintillation light) and the optical path length of the scintillation light S2 (second scintillation light) can be set to coincide with each other.

According to the imaging system 1, as described above, the configuration can be simplified, and the degree of freedom in adjusting the imaging positions can be sufficiently ensured.

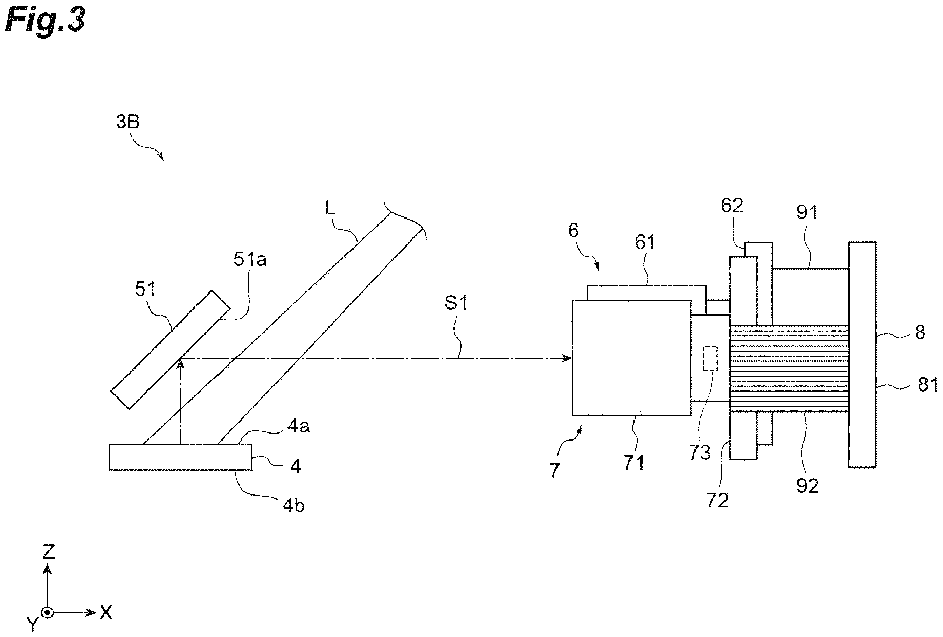

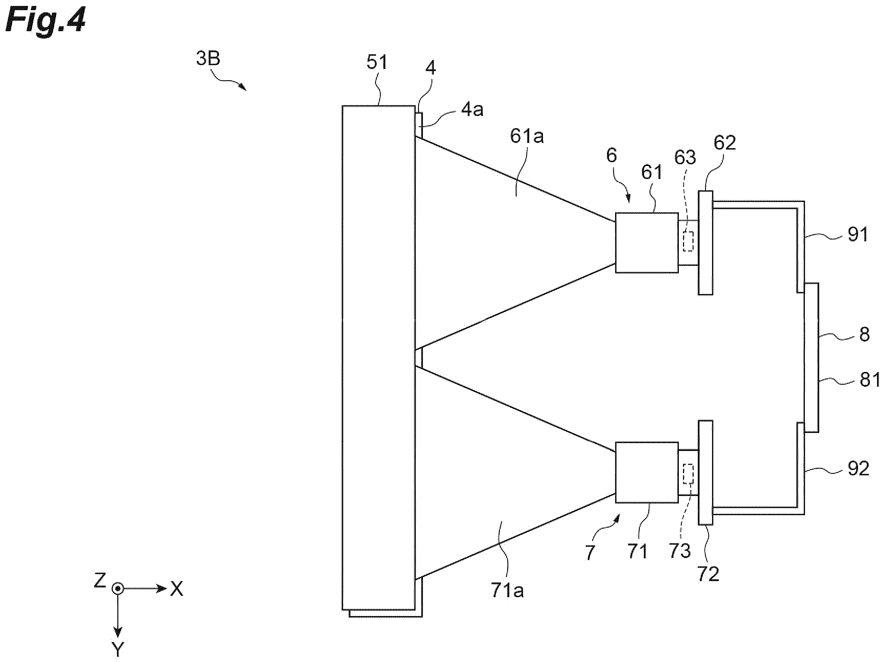

[Second embodiment] FIG. 3 is a view showing a schematic configuration of an imaging unit according to a second embodiment of the present disclosure. FIG. 4 is a plan view of the imaging unit shown in FIG. 3. As shown in FIGS. 3 and 4, an imaging unit 3B according to the second embodiment differs from the imaging unit 3A of the first embodiment in that the first sensor module 6 and the second sensor module 7 are disposed on the first surface 4a side of the scintillator 4 and are arranged in the Y-axis direction and the second mirror 52 is not provided.

An imaging system according to the second embodiment is an X-ray imaging system using a scintillator front surface observation method. In the imaging unit 3B, the first sensor module 6 and the second sensor module 7 are disposed on the first surface 4a side of the scintillator 4 in the Z-axis direction, and are arranged in the Y-axis direction (in-plane direction of the first surface 4a). The first sensor module 6 detects the scintillation light S1 emitted from the first surface 4a upon an incidence of the radiation L, as a first scintillation light. The second sensor module 7 detects the scintillation light S1 emitted from the first surface 4a upon an incidence of the radiation L, as a second scintillation light.

An interval between the first lens 61 of the first sensor module 6 and the scintillator 4 in the Z-axis direction is equal to an interval between the second lens 71 of the second sensor module 7 and the scintillator 4 in the Z-axis direction. Specifically, an interval between the optical axis of the first lens 61 and the first surface 4a is equal to an interval between the optical axis of the second lens 71 and the first surface 4a. Namely, an optical path length of the scintillation light S1 (the scintillation light S1 to be incident on the first lens 61) in the Z-axis direction between the reflective surface 51a of the first mirror 51 and the first surface 4a is equal to an optical path length of the scintillation light S1 (the scintillation light S1 to be incident on the second lens 71) in the Z-axis direction between the reflective surface 51a and the first surface 4a.

The positions of the first lens 61 and the second lens 71 in the X-axis direction with respect to the scintillator 4 coincide with each other. Namely, an optical path length of the scintillation light S1 in the X-axis direction between the reflective surface 51a and the first lens 61 is equal to an optical path length of the scintillation light S1 in the X-axis direction between the reflective surface 51a and the second lens 71. In such a manner, an optical path length of the scintillation light S1 between the first surface 4a of the scintillator 4 and the first lens 61 is equal to an optical path length of the scintillation light S1 between the first surface 4a of the scintillator 4 and the second lens 71.

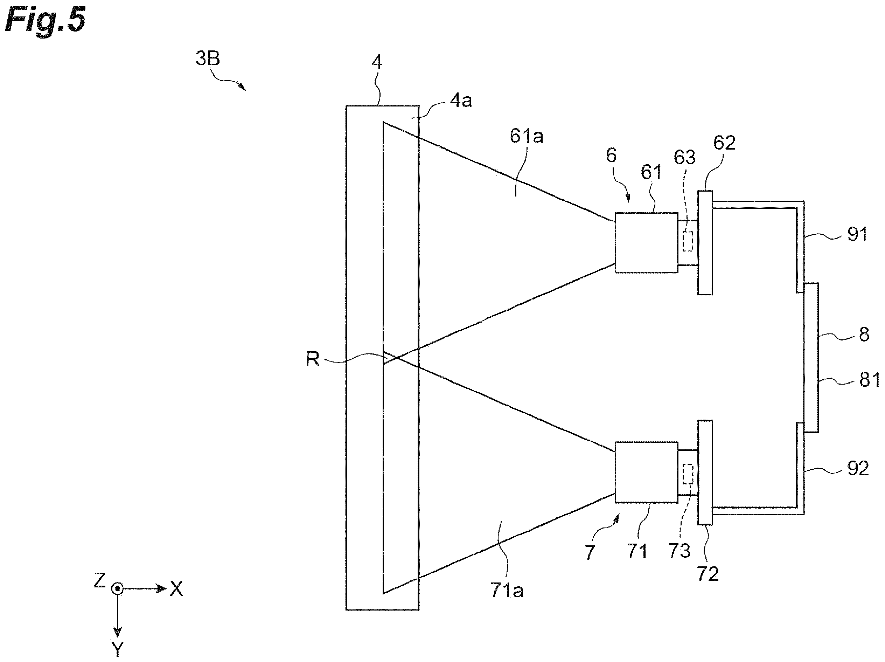

FIG. 5 is a view showing visual fields of the first lens 61 and the second lens 71 shown in FIG. 3. In FIG. 5, the first mirror 51 is not shown. As shown in FIG. 5, the visual fields of the first lens 61 and the second lens 71 partially overlap each other in the Y-axis direction. Specifically, when viewed in the Z-axis direction, the range of the visual field 61a of the first lens 61 in the Y-axis direction with respect to the first surface 4a and the range of the visual field 61a of the second lens 71 in the Y-axis direction with respect to the first surface 4a partially overlap each other. When viewed in the Z-axis direction, the range of the visual field 61a of the first lens 61 in the Y-axis direction and the range of the visual field 71a of the second lens 71 in the Y-axis direction partially overlap each other on the reflective surface 51a (refer to FIG. 3) of the first mirror 51. An overlapping region R exists between the visual field 61a and the visual field 71a. A width of the overlapping region R in the Y-axis direction can be adjusted by adjusting the positions of the first sensor module 6 and the second sensor module 7 in the Y-axis direction.

In such a manner, in the imaging unit 3B, the first sensor module 6 and the second sensor module 7 are arranged in the Y-axis direction, so that a visual field of the imaging unit 3B in the Y-axis direction is widened, and the overlapping region R is appropriately provided, so that the visual field 61a and the visual field 71a are continuous with each other in the Y-axis direction.

Here, as described above, since the first connection member 91 and the second connection member 92 have flexibility, the position of each of the first sensor module 6 and the second sensor module 7 with respect to the processing substrate 8 can be adjusted. Accordingly, the above-described positional relationship can be easily adjusted by adjusting the position of each of the first sensor module 6 and the second sensor module 7.

As described above, the scintillator 4 has the first surface 4a serving as an incident surface of the radiation L, and the second surface 4b facing the first surface 4a. The first sensor module 6 and the second sensor module 7 are disposed on the first surface 4a side of the scintillator 4 in the Z-axis direction, and are arranged in the Y-axis direction. The first sensor module 6 detects the scintillation light S1 emitted from the first surface 4a upon an incidence of the radiation L, as the first scintillation light. The second sensor module 7 detects the scintillation light S1 emitted from the first surface 4a upon an incidence of the radiation L, as the second scintillation light. Accordingly, the respective scintillation lights S1 from single side of the scintillator 4 can be accurately detected by the first sensor module 6 and the second sensor module 7.

The visual field 61a of the first lens 61 of the first sensor module 6 and the visual field 71a of the second lens 71 of the second sensor module 7 partially overlap each other in the Z-axis direction. Accordingly, the visual field 61a of the first lens 61 and the visual field 71a of the second lens 71 are continuous with each other, and an image of the scintillation light S1 can be captured over a wide range without a blind spot.

The first sensor module 6 and the second sensor module 7 are disposed apart from the scintillator 4 on the one side in the X-axis direction. The interval between the first lens 61 of the first sensor module 6 and the scintillator 4 in the Z-axis direction is equal to the interval between the second lens 71 of the second sensor module 7 and the scintillator 4 in the Z-axis direction. The positions of the first lens 61 and the second lens 71 in the X-axis direction with respect to the scintillator 4 coincide with each other. Accordingly, the first lens 61 and the second lens 71 can be common. In addition, since image correction due to a difference between the optical path length of the scintillation light S1 (first scintillation light) to be incident on the first lens 61 and the optical path length of the scintillation light S1 (second scintillation light) to be incident on the second lens 71 is not required, image processing in the processing substrate 8 can be prevented from being complicated.

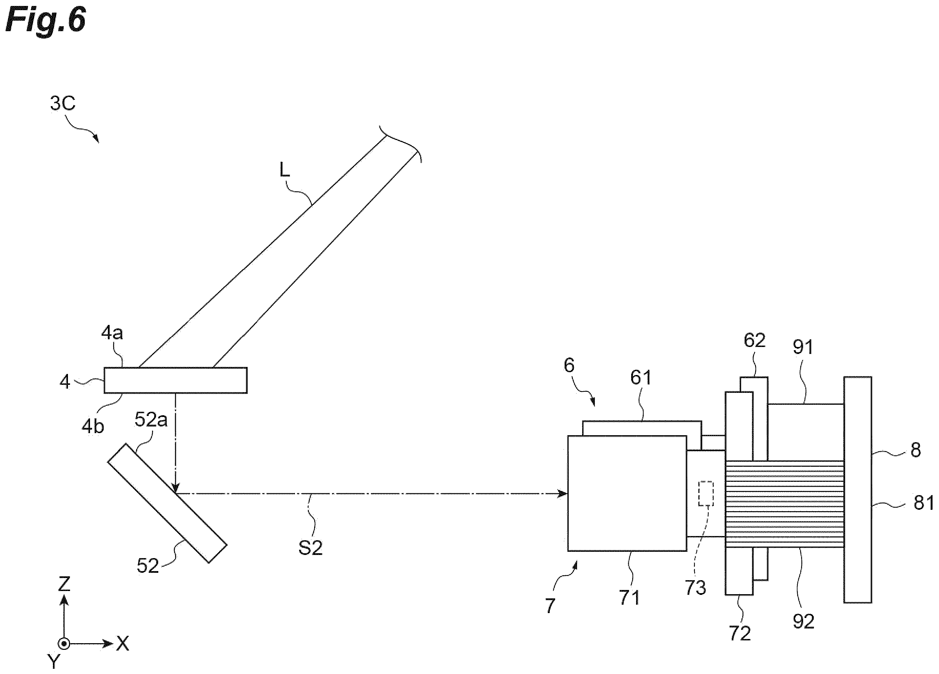

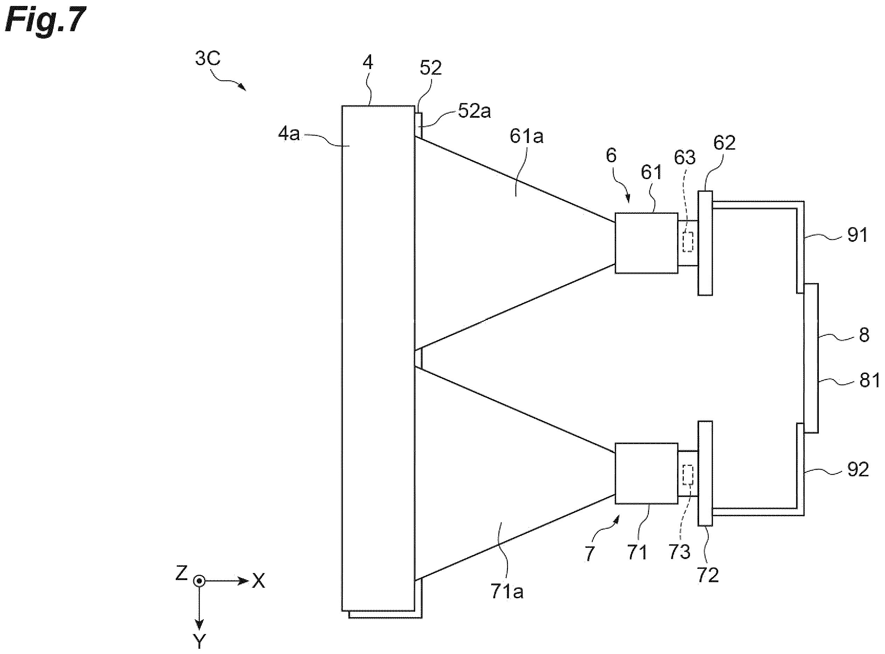

[Third embodiment] FIG. 6 is a view showing a schematic configuration of an imaging unit according to a third embodiment of the present disclosure. FIG. 7 is a plan view of the imaging unit shown in FIG. 6. As shown in FIGS. 6 and 7, an imaging unit 3C according to the third embodiment differs from the imaging unit 3B of the second embodiment in that the first sensor module 6 and the second sensor module 7 are disposed on the second surface 4b side of the scintillator 4, and in that the first mirror 51 is not provided and the second mirror 52 is provided.

An imaging system according to the third embodiment is an X-ray imaging system using a scintillator back surface observation method. In the imaging unit 3C, the first sensor module 6 and the second sensor module 7 are disposed on the second surface 4b side of the scintillator 4 in the Z-axis direction. The first sensor module 6 detects the scintillation light S2 emitted from the second surface 4b upon an incidence of the radiation L, as a first scintillation light. The second sensor module 7 detects the scintillation light S2 emitted from the second surface 4b upon an incidence of the radiation L, as a second scintillation light.

In the imaging unit 3C, similarly to the imaging unit 3B according to the second embodiment, an interval between the optical axis of the first lens 61 and the second surface 4b is equal to an interval between the optical axis of the second lens 71 and the second surface 4b, and the positions of the first lens 61 and the second lens 71 in the X-axis direction with respect to the scintillator 4 coincide with each other. In addition, in the imaging unit 3C, similarly to the imaging unit 3B of the second embodiment, the visual fields of the first lens 61 and the second lens 71 partially overlap each other in the Y-axis direction.

As described above, the scintillator 4 has the first surface 4a serving as an incident surface of the radiation L, and the second surface 4b facing the first surface 4a. The first sensor module 6 and the second sensor module 7 are disposed on the second surface 4b side of the scintillator 4 in the Z-axis direction, and are arranged in the Y-axis direction. The first sensor module 6 detects the scintillation light S2 emitted from the second surface 4b upon an incidence of the radiation L, as the first scintillation light. The second sensor module 7 detects the scintillation light S2 emitted from the second surface 4b upon an incidence of the radiation L, as the second scintillation light. Accordingly, the respective scintillation lights S2 from single side of the scintillator 4 can be accurately detected by the first sensor module 6 and the second sensor module 7.

### Reference Signs List

1: imaging system, 3A, 3B, 3C: imaging unit, 4: scintillator, 4a: first surface, 4b: second surface, 6: first sensor module, 7: second sensor module, 8: processing substrate, 20: conveying device, 30: radiation source, 61: first lens, 61a, 71a: visual field, 63: first sensor, 71: second lens, 73: second sensor, 91: first connection member, 92: second connection member, A: object, L: radiation, S1, S2: scintillation light.

## Claims

1. An imaging unit comprising:
a first sensor module (6) including a first lens (61) that condenses a first scintillation light (S1), and a first sensor (63) that detects the first scintillation light (S1) condensed by the first lens (61), and that outputs a first image signal corresponding to a detection result;
a second sensor module (7) including a second lens (71) that condenses a second scintillation light (S2), and a second sensor (73) that detects the second scintillation light (S2) condensed by the second lens (71), and that outputs a second image signal corresponding to a detection result;
a processing substrate (8) that executes image processing based on the first image signal and the second image signal;
a first connection member (91) having flexibility, and electrically connecting the first sensor module (6) and the processing substrate (8);
a second connection member (92) having flexibility, and electrically connecting the second sensor module (7) and the processing substrate (8);
a scintillator (4) that emits a scintillation light (S1, S2) upon an incidence of radiation (L), wherein the scintillator has a first surface (4a) serving as an incident surface of the radiation (L), and a second surface (4b) facing the first surface; and
a housing having a rectangular parallelepiped shape, in which the scintillator (4), the first mirror (51), the second mirror (52), the first sensor module (6), the second sensor module (7) and the processing substrate (8) are held and housed, and which comprises a slit in a wall portion for passing the radiation (L) upon the scintillator (4),
wherein the first sensor module (6) and the second sensor module (7) are disposed apart from the scintillator (4) on one side in an in-plane direction of the first surface (4a) and the second surface (4b).

2. The imaging unit according to claim 1, wherein
the first sensor module (6) is disposed on the first surface side of the scintillator (4) in a facing direction between the first surface (4a) and the second surface (4b), and detects the scintillation light emitted from the first surface (4a) upon the incidence of the radiation (L), as the first scintillation light (S1), and
the second sensor module (7) is disposed on a second surface side of the scintillator (4) in the facing direction, and detects the scintillation light emitted from the second surface (4b) upon the incidence of the radiation (L), as the second scintillation light (S2).

3. The imaging unit according to claim 2, wherein
an interval between the first lens (61) of the first sensor module (6) and the first surface (4a) in the facing direction is smaller than an interval between the second lens (71) of the second sensor module (7) and the second surface (4b) in the facing direction, and
a position of the second lens (71) in the in-plane direction is closer to a scintillator side than a position of the first lens (61) in the in-plane direction.

4. The imaging unit according to claim 1, wherein
the first sensor module (6) and the second sensor module (7) are disposed on a first surface side of the scintillator (4) in a facing direction between the first surface (4a) and the second surface (4b), and are arranged in an in-plane direction of the first surface (4a),
the first sensor module (6) detects the scintillation light emitted from the first surface (4a) upon the incidence of the radiation (L), as the first scintillation light (S1), and
the second sensor module (7) detects the scintillation light emitted from the first surface (4a) upon the incidence of the radiation (L), as the second scintillation light (S2).

5. The imaging unit according to claim 1, wherein
the first sensor module (6) and the second sensor module (7) are disposed on a second surface side of the scintillator (4) in a facing direction between the first surface (4a) and the second surface (4b), and are arranged in an in-plane direction of the second surface (4b),
the first sensor module (6) detects the scintillation light emitted from the second surface (4b) upon the incidence of the radiation (L), as the first scintillation light (S1), and
the second sensor module (7) detects the scintillation light emitted from the second surface (4b) upon the incidence of the radiation (L), as the second scintillation light (S2).

6. The imaging unit according to claim 4 or 5,
wherein a visual field (61a) of the first lens (61) of the first sensor module (6) and a visual field (71a) of the second lens (71) of the second sensor module (7) partially overlap each other in the in-plane direction of the first surface (4a) and the second surface (4b).

7. The imaging unit according to any one of claims 4 to 6,
an interval between the first lens (61) of the first sensor module (6) and the scintillator (4) in the facing direction is equal to an interval between the second lens (71) of the second sensor module (7) and the scintillator (4) in the facing direction, and
positions of the first lens (61) and the second lens (71) in the in-plane direction with respect to the scintillator (4) coincide with each other.

8. An imaging system comprising:
a conveying device (20) that conveys an object (A);
a radiation source (30) that emits radiation toward the object (A) conveyed by the conveying device (20); and
the imaging unit (3A, 3B, 3C) according to any one of claims 1 to 7 that executes image processing based on an image signal corresponding to the radiation (L) that has transmitted through the object (A).

## Patentansprüche

1. Bildgebungseinheit, mit:
einem ersten Sensormodul (6) mit einer ersten Linse (61), welche ein erstes Szintillationslicht (S1) bündelt, sowie einem ersten Sensor (63), der das von der ersten Linse (61) gebündelte erste Szintillationslicht (S1) erfasst und ein einem Erfassungsergebnis entsprechendes erstes Bildsignal ausgibt;
einem zweiten Sensormodul (7) mit einer zweiten Linse (71), welche ein zweites Szintillationslicht (S2) bündelt, sowie einem zweiten Sensor (73), der das von der zweiten Linse (71) gebündelte zweite Szintillationslicht (S2) erfasst und ein einem Erfassungsergebnis entsprechendes zweites Bildsignal ausgibt;
einem Verarbeitungssubstrat (8), das auf der Grundlage des ersten Bildsignals und des zweiten Bildsignals eine Bildverarbeitung ausführt;
einem ersten Verbindungselement (91), das flexibel ist, und das das erste Sensormodul (6) und das Verarbeitungssubstrat (8) elektrisch verbindet;
einem zweiten Verbindungselement (92), das flexibel ist, und das das zweite Sensormodul (7) und das Verarbeitungssubstrat (8) elektrisch verbindet;
einem Szintillator (4), der bei Einfall von Strahlung (L) ein Szintillationslicht (S1, S2) emittiert, wobei der Szintillator eine als Einfallsfläche für die Strahlung (L) dienende erste Oberfläche (4a) und eine der ersten Oberfläche gegenüberliegende zweite Oberfläche (4b) aufweist; und
einem Gehäuse mit einer rechteckigen Parallelepipedform, in dem der Szintillator (4), der erste Spiegel (51), der zweite Spiegel (52), das erste Sensormodul (6), das zweite Sensormodul (7) sowie das Verarbeitungssubstrat (8) gehalten und untergebracht sind, wobei das Gehäuse in einem Wandabschnitt einen Schlitz zum Durchtritt der Strahlung (L) zum Szintillator (4) aufweist,
wobei das erste Sensormodul (6) und das zweite Sensormodul (7) auf einer Seite in einer Ebene-Richtung der ersten Oberfläche (4a) und der zweiten Oberfläche (4b) vom Szintillator (4) beabstandet angeordnet sind.

2. Bildgebungseinheit nach Anspruch 1, wobei
das erste Sensormodul (6) bezüglich der ersten Oberfläche (4a) und der zweiten Oberfläche (4b) in der Blickrichtung der ersten Oberfläche des Szintillators (4) angeordnet ist, und das bei Einfall der Strahlung (L) von der ersten Oberfläche (4a) emittierte Szintillationslicht als erstes Szintillationslicht (S1) erfasst, und
das zweite Sensormodul (7) auf der Seite der zweiten Oberfläche des Szintillators (4) in deren Blickrichtung angeordnet ist, und das von der zweiten Oberfläche (4b) bei Einfall der Strahlung (L) emittierte Szintillationslicht als zweites Szintillationslicht (S2) erfasst.

3. Bildgebungseinheit nach Anspruch 2, wobei
ein Abstand zwischen der ersten Linse (61) des ersten Sensormoduls (6) und der ersten Oberfläche (4a) in deren Blickrichtung kleiner ist als ein Abstand zwischen der zweiten Linse (71) des zweiten Sensormoduls (7) und der zweiten Oberfläche (4b) in deren Blickrichtung, und
eine Position der zweiten Linse (71) in der Ebene-Richtung näher an einer Szintillatorseite liegt als eine Position der ersten Linse (61) in der Ebene-Richtung.

4. Bildgebungseinheit nach Anspruch 1, wobei
das erste Sensormodul (6) und das zweite Sensormodul (7) bezüglich der ersten Oberfläche (4a) und der zweiten Oberfläche (4b) in der Blickrichtung der ersten Oberfläche des Szintillators (4) und in einer Ebene-Richtung der ersten Oberfläche (4a) angeordnet sind,
das erste Sensormodul (6) das bei Einfall der Strahlung (L) von der ersten Oberfläche (4a) emittierte Szintillationslicht als erstes Szintillationslicht (S1) erfasst, und
das zweite Sensormodul (7) das bei Einfall der Strahlung (L) von der ersten Oberfläche (4a) emittierte Szintillationslicht als zweites Szintillationslicht (S2) erfasst.

5. Bildgebungseinheit nach Anspruch 1, wobei
das erste Sensormodul (6) und das zweite Sensormodul (7) bezüglich der ersten Oberfläche (4a) und der zweiten Oberfläche (4b) in der Blickrichtung der zweiten Oberfläche des Szintillators (4) und in einer Ebene-Richtung der zweiten Oberfläche (4b) angeordnet sind,
das erste Sensormodul (6) das bei Einfall der Strahlung (L) von der zweiten Oberfläche (4b) emittierte Szintillationslicht als erstes Szintillationslicht (S1) erfasst, und
das zweite Sensormodul (7) das bei Einfall der Strahlung (L) von der zweiten Oberfläche (4b) emittierte Szintillationslicht als zweites Szintillationslicht (S2) erfasst.

6. Bildgebungseinheit nach Anspruch 4 oder 5,
wobei sich ein Sichtfeld (61a) der ersten Linse (61) des ersten Sensormoduls (6) und ein Sichtfeld (71a) der zweiten Linse (71) des zweiten Sensormoduls (7) in der Ebene-Richtung der ersten Oberfläche (4a) und der zweiten Oberfläche (4b) teilweise überlappen.

7. Bildgebungseinheit nach einem der Ansprüche 4 bis 6,
wobei ein Abstand zwischen der ersten Linse (61) des ersten Sensormoduls (6) und dem Szintillator (4) in der Blickrichtung gleich einem Abstand zwischen der zweiten Linse (71) des zweiten Sensormoduls (7) und dem Szintillator (4) in der Blickrichtung ist, und
die Positionen der ersten Linse (61) und der zweiten Linse (71) in der Ebene-Richtung in Bezug auf den Szintillator (4) miteinander übereinstimmen.

8. Bildgebungssystem, mit:
einer Bewegungsvorrichtung (20), die ein Objekt (A) bewegt;
einer Strahlungsquelle (30), die Strahlung in Richtung des von der Bewegungsvorrichtung (20) bewegten Objekts (A) emittiert; und
der Bildgebungseinheit (3A, 3B, 3C) nach einem der Ansprüche 1 bis 7, die eine Bildverarbeitung auf der Grundlage eines Bildsignals durchführt, das der durch das Objekt (A) hindurchgetretenen Strahlung (L) entspricht.

## Revendications

1. Unité d'imagerie comprenant :
un premier module de capteur (6) comprenant une première lentille (61) qui condense une première lumière de scintillation (S1), et un premier capteur (63) qui détecte la première lumière de scintillation (S1) condensée par la première lentille (61), et qui émet un premier signal d'image correspondant à un résultat de détection ;
un second module de capteur (7) comprenant une seconde lentille (71) qui condense une seconde lumière de scintillation (S2), et un second capteur (73) qui détecte la seconde lumière de scintillation (S2) condensée par la seconde lentille (71), et qui émet un second signal d'image correspondant à un résultat de détection ;
un substrat de traitement (8) qui exécute un traitement d'image basé sur le premier signal d'image et le second signal d'image ;
un premier élément de connexion (91) ayant une flexibilité, et reliant électriquement le premier module de capteur (6) et le substrat de traitement (8) ;
un second élément de connexion (92) ayant une flexibilité, et reliant électriquement le second module de capteur (7) et le substrat de traitement (8) ;
un scintillateur (4) qui émet une lumière de scintillation (S1, S2) lors de l'incidence d'un rayonnement (L), le scintillateur ayant une première surface (4a) servant de surface d'incidence du rayonnement (L) et une seconde surface (4b) faisant face à la première surface ; et
un boîtier ayant une forme de parallélépipède rectangulaire, dans lequel le scintillateur (4), le premier miroir (51), le second miroir (52), le premier module de capteur (6), le second module de capteur (7) et le substrat de traitement (8) sont maintenus et logés, et qui comprend une fente dans une partie de paroi pour faire passer le rayonnement (L) sur le scintillateur (4),
dans lequel le premier module de capteur (6) et le second module de capteur (7) sont disposés à l'écart du scintillateur (4) sur un côté dans une direction dans le plan de la première surface (4a) et de la seconde surface (4b).

2. Unité d'imagerie selon la revendication 1, dans laquelle
le premier module de capteur (6) est disposé sur le premier côté de surface du scintillateur (4) dans une direction de face entre la première surface (4a) et la seconde surface (4b), et détecte la lumière de scintillation émise par la première surface (4a) lors de l'incidence du rayonnement (L), en tant que première lumière de scintillation (S1), et
le second module de capteur (7) est disposé sur un second côté de surface du scintillateur (4) dans la direction de face, et détecte la lumière de scintillation émise par la seconde surface (4b) lors de l'incidence du rayonnement (L), en tant que seconde lumière de scintillation (S2).

3. Unité d'imagerie selon la revendication 2, dans laquelle
un intervalle entre la première lentille (61) du premier module de capteur (6) et la première surface (4a) dans la direction de face est plus petit qu'un intervalle entre la seconde lentille (71) du second module de capteur (7) et la seconde surface (4b) dans la direction de face, et
une position de la seconde lentille (71) dans la direction dans le plan est plus proche d'un côté du scintillateur qu'une position de la première lentille (61) dans la direction dans le plan.

4. Unité d'imagerie selon la revendication 1, dans laquelle
le premier module de capteur (6) et le second module de capteur (7) sont disposés sur un premier côté de surface du scintillateur (4) dans une direction de face entre la première surface (4a) et la seconde surface (4b), et sont agencés dans une direction dans le plan de la première surface (4a),
le premier module de capteur (6) détecte la lumière de scintillation émise par la première surface (4a) lors de l'incidence du rayonnement (L), en tant que première lumière de scintillation (S1), et
le second module de capteur (7) détecte la lumière de scintillation émise par la première surface (4a) lors de l'incidence du rayonnement (L), en tant que seconde lumière de scintillation (S2).

5. Unité d'imagerie selon la revendication 1, dans laquelle
le premier module de capteur (6) et le second module de capteur (7) sont disposés sur un second côté de surface du scintillateur (4) dans une direction de face entre la première surface (4a) et la seconde surface (4b), et sont agencés dans une direction dans le plan de la seconde surface (4b),
le premier module de capteur (6) détecte la lumière de scintillation émise par la seconde surface (4b) lors de l'incidence du rayonnement (L), en tant que première lumière de scintillation (S1), et
le second module de capteur (7) détecte la lumière de scintillation émise par la seconde surface (4b) lors de l'incidence du rayonnement (L), en tant que seconde lumière de scintillation (S2).

6. Unité d'imagerie selon la revendication 4 ou 5,
dans laquelle un champ visuel (61a) de la première lentille (61) du premier module de capteur (6) et un champ visuel (71a) de la seconde lentille (71) du second module de capteur (7) se chevauchent partiellement dans la direction dans le plan de la première surface (4a) et de la seconde surface (4b).

7. Unité d'imagerie selon l'une des revendications 4 à 6,
un intervalle entre la première lentille (61) du premier module de capteur (6) et le scintillateur (4) dans la direction de face est égal à un intervalle entre la seconde lentille (71) du second module de capteur (7) et le scintillateur (4) dans la direction de face, et
des positions de la première lentille (61) et de la seconde lentille (71) dans la direction dans le plan par rapport au scintillateur (4) coïncident l'une avec l'autre.

8. Système d'imagerie comprenant :
un dispositif de transport (20) qui transporte un objet (A) ;
une source de rayonnement (30) qui émet un rayonnement vers l'objet (A) transporté par le dispositif de transport (20) ; et
l'unité d'imagerie (3A, 3B, 3C) selon l'une des revendications 1 à 7 qui exécute un traitement d'image sur la base d'un signal d'image correspondant au rayonnement (L) qui est transmis à travers l'objet (A).
